(19) Europäisches Patentamt
European Patent Office
Office européen des brevets

(11) **EP 1 265 064 A1**

(12) **EUROPÄISCHE PATENTANMELDUNG**

(43) Veröffentlichungstag:
**11.12.2002 Patentblatt 2002/50**

(51) Int Cl.⁷: **G01N 21/64**

(21) Anmeldenummer: **02011512.7**

(22) Anmeldetag: **22.05.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **07.06.2001 DE 10127611**

(71) Anmelder: **Jena-Optronik GmbH**
**07745 Jena (DE)**

(72) Erfinder: **Thorwirth, Günter**
**07646 Laasdorf (DE)**

(74) Vertreter: **Freitag, Joachim, Dipl.-Phys. et al**
**Patentanwälte**
**Oehmke & Kollegen**
**Neugasse 13**
**07743 Jena (DE)**

(54) **Anordnung zum optischen Anregen der Fluoreszenzstrahlung ausgewählter Einzelproben auf einem Multiprobenträger**

(57) Die Erfindung betrifft eine Anordnung zum Auslesen der Fluoreszenzstrahlung von Probenträgern mit einer Vielzahl von Einzelproben, bei der zur Anregung der Fluoreszenzstrahlung in ausgewählten Einzelproben eine schaltbare elektrooptische Matrix zur örtlich definiert begrenzten Beleuchtung vorhanden ist.

Die Aufgabe, eine neue Möglichkeit für eine örtlich differenzierte Beleuchtung eines Probenträgers (5) mit einer Vielzahl von Proben unter Verwendung einer elektrooptischen Matrix (2) zu finden, die bei hochaufgelöster Abbildung der elektrooptischen Matrix (2) auf den Probenträger (5) den Anteil der zum Fluoreszenzsignal beitragenden Anregungsstrahlung minimiert, wird bei einer Anordnung zum Auslesen der Fluoreszenzstrahlung ausgewählter Einzelproben von Multiprobenträgern (5) mit einer schaltbaren elektrooptischen Matrix (2) zur Erzeugung einer örtlich definiert begrenzten Beleuchtung, einem optischen System (3) zur Abbildung der elektrooptischen Matrix (2) auf den Probenträger (5) sowie einem hochempfindlichen Photoempfänger (7) zur integralen Messung der Fluoreszenzstrahlung angeregter Einzelproben des Probenträger (5), erfindungsgemäß gelöst, indem die elektrooptische Matrix (2) und der Probenträger (5) gegenüber der optischen Achse (31) des optischen Systems (3) geneigt sind und einer Scheimpflug-Bedingung unterliegen und die Neigungswinkel ($\alpha$; $\beta$) der elektrooptischen Matrix (2) und des Probenträgers (5) so groß gewählt sind, dass die von der Lichtquelleneinheit (1) abgebildete Anregungsstrahlung am Probenträger (5) derart reflektiert wird, dass im Wesentlichen keine Anregungsstrahlung in den Detektionsstrahlengang (53) gelangt.

Fig. 1

EP 1 265 064 A1

**Beschreibung**

Die Erfindung betrifft eine Anordnung zum Auslesen der Fluoreszenzstrahlung von Probenträgern mit einer Vielzahl von Einzelproben, bei der zur Anregung der Fluoreszenzstrahlung in ausgewählten Einzelproben eine schaltbare elektrooptische Matrix zur örtlich definiert begrenzten Beleuchtung vorhanden ist. Die Erfindung ist insbesondere zum pixelgenauen Auslesen der Fluoreszenz von Biochips anwendbar.

Aus der Analytik, insbesondere aus der Biomedizin, sind als optische Analyse-/Auslese-Geräte für Biochips (sogenannte Biochip-Reader) nach den Grundprinzipien Laserscanner und CCD-Imager bekannt geworden. Während Laserscanner einen Multiprobenträger punktweise abtasten und die dadurch induzierte Fluoreszenzstrahlung seriell (aufeinanderfolgend) mit einem hochempfindlichen Sekundärelektronenvervielfacher (SEV bzw. PMT = Photomultiplier) aufgenommen wird, erstellen CCD-Imager bei simultaner Beleuchtung einer Vielzahl (ggf. aller) Proben eine optische Abbildung des gesamten Probenträgers (oder wesentlicher Teile davon).

Bei diesen beiden Reader-Konzepten wird das Auslesen eines Biochip mit Mehrfarben-Labeling, d.h. mit mehreren Fluoreszenzmarkern je Probe, dadurch realisiert, dass jeweils der gesamte Biochip zeitlich nacheinander hinsichtlich der verschiedenen Fluorochrome angeregt und ausgelesen wird. Bei den Laser-Scannern wird dies dadurch erreicht, dass nacheinander verschiedene, den jeweiligen Fluorochromen angepasste schmalbandige (Laser-) Lichtquellen eingeschaltet werden. Bei den CCD-Imagern, die mit einer breitbandigen Lichtquelle ausgestattet sind, werden nacheinander verschiedene Anregungsfilter- und Sperrfilterkombinationen in den Beleuchtungs- und Auslesestrahlengang eingebracht.

Ein neuartiges Prinzip optischer Analysegeräte ist in der Deutschen Patentschrift DE 199 14 279 C 1 zum Auslesen von Biochips beschrieben worden.

Dieses Reader-Konzept zeichnet sich dadurch aus, dass es die Vorzüge beider oben genannten Ausleseprinzipien vereinigt, wobei ohne die Verwendung von Lasern eine hochempfindliche Fluoreszenzdetektion mit PMT ermöglicht wird. Dabei werden die einzelnen Positionen von Analyseproben (sogenannten Spots) auf dem Biochip durch Verwendung eines Lichtventils in Form einer elektrooptischen Matrix wahlfrei separat ausgewertet, indem die Intensität der Spotfluoreszenz für jeweils eine ausgewählte (beleuchtete oder zum Empfänger freigegebene) Fläche, die Einzelspots oder Gruppen von Spots beinhalten kann, integral in einem Messwert erfasst wird. Soll der Biochip in üblicher Weise mit einer örtlich differenzierten Anregungsintensität (z.B. Spot für Spot) ausgelesen werden, ist eine hochgenaue Abbildung der strukturierten elektrooptischen Matrix in die Ebene des Biochip notwendig, damit die Matrix als Lichtblende mit frei wählbarer Lage und Größe des Anregungslichts eine hochgenaue Anregung ausgewählter Spots des Biochip realisieren kann.

Nachteilig wirkt sich dabei aus, dass einerseits die Abbildung der Matrixpixel hochgenau, d.h. verzeichnungs- und komafrei, erfolgen muss, damit Biochip-Spots, die angeregt werden sollen, vollständig beleuchtet werden und benachbarte Spots, die nicht angeregt werden sollen, nicht durch unerwünschte Beleuchtung zum integral gemessenen Fluoreszenzsignal beitragen, und andererseits dafür vorteilhaft einsetzbare telezentrische Objektive eine Auflicht-Dunkelfeldbeleuchtung, die für die einfache Trennung von Anregungs- und Fluoreszenzlicht vorteilhaft wäre, nicht zulassen.

Der Erfindung liegt die Aufgabe zugrunde, eine neue Möglichkeit für eine örtlich differenzierte Beleuchtung eines Probenträgers mit einer Vielzahl von Proben unter Verwendung einer elektrooptischen Matrix zu finden, die bei hochaufgelöster Abbildung der elektrooptischen Matrix auf den Probenträger den Anteil der zum Auslesesignal beitragenden Anregungsstrahlung minimiert.

Erfindungsgemäß wird die Aufgabe bei einer Anordnung zum Auslesen der Fluoreszenzstrahlung von Probenträgern mit einer Vielzahl von Einzelproben, bei der zur Anregung einer Fluoreszenzstrahlung in ausgewählten Einzelproben eine schaltbare elektrooptische Matrix zur Erzeugung einer örtlich definiert begrenzten Beleuchtung, ein optisches System zur Abbildung der elektrooptischen Matrix auf den Probenträger, wobei im Strahlengang vor dem Probenträger zur optimalen Anregung der Fluoreszenz wechselbare Anregungsfilter angeordnet sind, sowie ein hochempfindlicher Photoempfänger zur integralen Messung der Fluoreszenzstrahlung der angeregten Einzelproben des Probenträgers vorhanden sind, dadurch gelöst, dass in der Objektebene des optischen Systems die elektrooptische Matrix und in der Bildebene der Probenträger angeordnet sind, wobei die elektrooptische Matrix und der Probenträger gegenüber der optischen Achse des optischen Systems geneigt sind und einer Scheimpflug-Bedingung unterliegen, so dass Objektebene und objektseitige Hauptebene sowie Bildebene und bildseitige Hauptebene des optischen Systems zwei Schnittlinien, die in ein und derselben, zur optischen Achse parallelen Ebene liegen, aufweisen, und die Neigungswinkel der elektrooptischen Matrix und des Probenträgers so groß gewählt sind, dass die von der Lichtquelleneinheit kommende, von der elektrooptische Matrix reflektierte und über das optische System auf den Probenträger abgebildete Anregungsstrahlung am Probenträger derart reflektiert wird, dass im Wesentlichen keine Anregungsstrahlung in den Detektionsstrahlengang gelangt.

Vorteilhaft besteht das abbildende optische System aus zwei identisch aufgebauten Objektiven, die auf derselben optischen Achse und spiegelsymmetrisch bezüglich einer Aperturblendenebene angeordnet sind, wobei die elektrooptische Matrix und der Probenträger spiegelsymmetrisch bezüglich des zweiteiligen optischen Systems angeordnet sind. Das symmetrische optische System weist dabei zweckmäßig einen beidseitig telezentrischen Abbildungsstrahlengang auf und ist dadurch komaund verzeichnungsfrei. Damit wird die optische Abbildung weitgehend unempfindlich gegenüber Defokussierung, die ansonsten zu einem veränderten Abbildungsmaßstab führen würde. Vorzugsweise werden als optisches System zwei hochauflösende, lichtstarke, auf Unendlich korrigierte Teilobjektive verwendet, wie z.B. Kameraobjektive. Wegen der vorzuziehenden Auflicht-Dunkelfeld-Beleuchtung des Probenträgers kann die elektrooptische Matrix zweckmäßig eine Reflexions-Flüssigkristallmatrix sein.

Besonders vorteilhaft wird als elektrooptische Matrix eine digital-mechanische Mikrospiegelmatrix (DMD) eingesetzt, die aus einer Vielzahl von Elementarspiegeln besteht, wobei die Elementarspiegel jeweils einheitlich einen definierten Kippwinkel für die Reflexion von Licht bei Hellschaltung und einen weiteren definierten Kippwinkel für die Strahlausblendung bei Dunkelschaltung aufweisen, und die Spiegelmatrix in Hellschaltung der Elementarspiegel auf den Neigungswinkel zur Einhaltung der Scheimpflug-Bedingung ausgerichtet ist, d.h. dass bei Hellschaltung der Elementarspiegel das von der digitalen Mikrospiegelmatrix reflektierte Anregungsbündel parallel zur optischen Achse in das optische System gerichtet ist und das reflektierte Anregungsbündel bei Dunkelschaltung der Elementarspiegel deutlich außerhalb der Objektivöffnung gerichtet ist.

Es erweist sich als besonders vorteilhaft für Beleuchtung und Auslesung des Probenträgers, wenn im Abbildungsstrahlengang zwischen dem optischen System und dem Probenträger ein Strahlteiler angeordnet ist, wobei der Abbildungsstrahlengang abgewinkelt auf den Probenträger gerichtet, die Anregungsstrahlung infolge der Neigung des Probenträgers aus dem abgewinkelten Abbildungsstrahlengang durch Reflexion am Probenträger ausgekoppelt und die angeregte Fluoreszenzstrahlung durch den Strahlteiler hindurch von der Detektoreinheit aufnehmbar ist.

In einer gleichwertigen Variante wird zweckmäßig im Abbildungsstrahlengang zwischen dem optischen System und dem Probenträger ein Strahlteiler angeordnet, bei dem der Abbildungsstrahlengang entlang der optischen Achse auf den Probenträger gerichtet, die Anregungsstrahlung infolge der Neigung des Probenträgers aus dem abgewinkelten Abbildungsstrahlengang durch Reflexion am Probenträger ausgekoppelt und die angeregte Fluoreszenzstrahlung durch den Strahlteiler umgelenkt von der Detektoreinheit aufnehmbar ist. In beiden Varianten kann vorteilhaft ein dichroitischer Strahlteiler zum Einsatz kommen, wobei im ersten Fall der Strahlteiler die Anregungsstrahlung reflektiert und für die Fluoreszenzstrahlung durchlässig ist, aber im zweiten Fall die Anregungsstrahlung durchlässt und die Fluoreszenzstrahlung reflektiert.

Damit wird eine zusätzliche Trennung von Anregungs- und Fluoreszenzstrahlung geschaffen. Zweckmäßig wird außerdem dem Strahlteiler im Detektionsstrahlengang für die Fluoreszenzstrahlung ein übliches Sperrfilter für gestreutes Anregungslicht nachgeordnet.

Zur einfachen Realisierung von Beleuchtungseinheit und elektrooptischer Matrix wird vorteilhaft der konstruktive Aufbau eines herkömmlichen Multimedia-Projektors verwendet und anstelle eines projektoreigenen Projektivs das optische System eingesetzt, wobei die Neigung der elektrooptischen Matrix gegenüber dem optischen System durch die Neigung des optischen Systems gegenüber der üblichen Lage des eliminierten Projektivs eingestellt ist und der Probenträger, der gemäß der Scheimpflug-Bedingung gegenüber der elektrooptischen Matrix eine entsprechende Neigung aufweist, auf der optischen Achse des optischen Systems angeordnet ist.

Für die Auswertung von mit nur einem Fluoreszenzmarker versehenen Proben- trägern wird zweckmäßig ein im oben beschriebenen Multimedia-Projektor innerhalb der Beleuchtungseinheit herkömmlich vorhandenes Filterrad aus dem Strahlengang der Beleuchtungseinheit entfernt.

Zur Auswertung von mehrfach mit Fluoreszenzmarkern markierten Proben- trägern ist es vorteilhaft ein im Multimedia-Projektor innerhalb der Beleuchtungseinheit (1) herkömmlich vorhandenes Filterrad mit unterschiedlichen Anregungsfiltern zu bestücken, wobei die verschiedenen Anregungsfilter aufeinanderfolgend in einem gesteuerten Zyklus in den Strahlengang gedreht werden, und im Detektionsstrahlengang vor der Detektoreinheit ein Multiband-Sperrfilter einzusetzen.

Dabei weist das Filterrad vorzugsweise eine Rotationsgeschwindigkeit auf, die synchron mit einem Schaltzustand der elektrooptischen Matrix eine volle Umdrehung beschreibt, und die Auslesung der Detektoreinheit ist zu einzelnen Filterzuständen des Filterrades so synchronisiert, dass in der Detektoreinheit eine Serie von Messwerten, die für gleiche Einzelproben mit unterschiedlichen Anregungsfiltern erzeugt werden, aufgenommen wird.

Die Erfindung basiert auf der Grundidee, für punktgenaue Anregung von Einzelproben auf Probenträgern mit einer Vielzahl von Proben (insbesondere medizinische Diagnosechips mit einigen Hundert Spots) die Vorzüge hochauflösender, verzeichnungsfreier Abbildung mittels telezentrischer Objektive mit einer vorteilhaften Auflicht-Dunkelfeld-Beleuchtung zu kombinieren.

Von telezentrischen Abbildungen, die über ein symmetrisch aufgebautes optisches System realisiert werden, ist bekannt, dass sie geringe optische Aberrationen besitzen und sich deshalb sehr gut für eine örtlich hochaufgelöste Anregung eines Multiprobenträgers eignen würden. Derartige symmetrische Abbildungsoptiken besitzen aber üblicherweise einen zur Hellfeld-Beleuchtung analogen Strahlungseinfall in der Bildebene des optischen Systems.

Die Kombination einer örtlich hochaufgelösten (insbesondere komafreien) Anregung eines Multiprobenträgers mit einer verzeichnungsfreien Abbildung der elektrooptischen Matrix in die Probenträger-Ebene und einem zur Dunkelfeld-Beleuchtung analogen Strahlungseinfall in der Probenträger-Ebene erfordert also einen Schrägeinfall des Anregungsbündels, was einer verzeichnungsfreien Abbildung der Beleuchtungsmatrix widerspricht. Die überraschende Lösung liegt darin, dass der Beleuchtungsstrahlengang als ein symmetrisch aufgebautes optisches System mit entgegengesetzt gerichteter Neigung von elektrooptischer Matrix und Probenträger in Bezug auf die optische Achse des zur Beleuchtung verwendeten abbildenden Systems aufgebaut und damit eine Dunkelfeldbeleuchtung unter Anwendung einer Art "Scheimpflug-Korrektur" realisiert wird.

Die erfindungsgemäße Anordnung gestattet eine nahezu vollständig komaund verzeichnungsfreie Abbildung bei einer Auflicht-Dunkelfeld-Beleuchtung des Probenträgers, die bei der hochaufgelösten Abbildung der elektrooptischen Matrix auf den Probenträger den Anteil der zum Auslesesignal beitragenden Anregungsstrahlung nahezu eliminiert.

Die Erfindung soll nachstehend anhand von Ausführungsbeispielen näher erläutert werden. Dazu zeigen die Zeichnungen:

Fig. 1:     eine Darstellung des Grundprinzips der Erfindung,

Fig. 2:     eine schematische Darstellung der erfindungsgemäßen Anordnung mit symmetrischem telezentrischen Abbildungsstrahlengang,

Fig. 3:     eine bevorzugte Ausgestaltung der erfindungsgemäßen Anordnung mit schematischer Darstellung des Beleuchtungsstrahlengangs,

Fig. 4:     eine Detaildarstellung zur Gestaltung der elektrooptischen Matrix unter Verwendung eines DMD (Digital Micromirror Device).

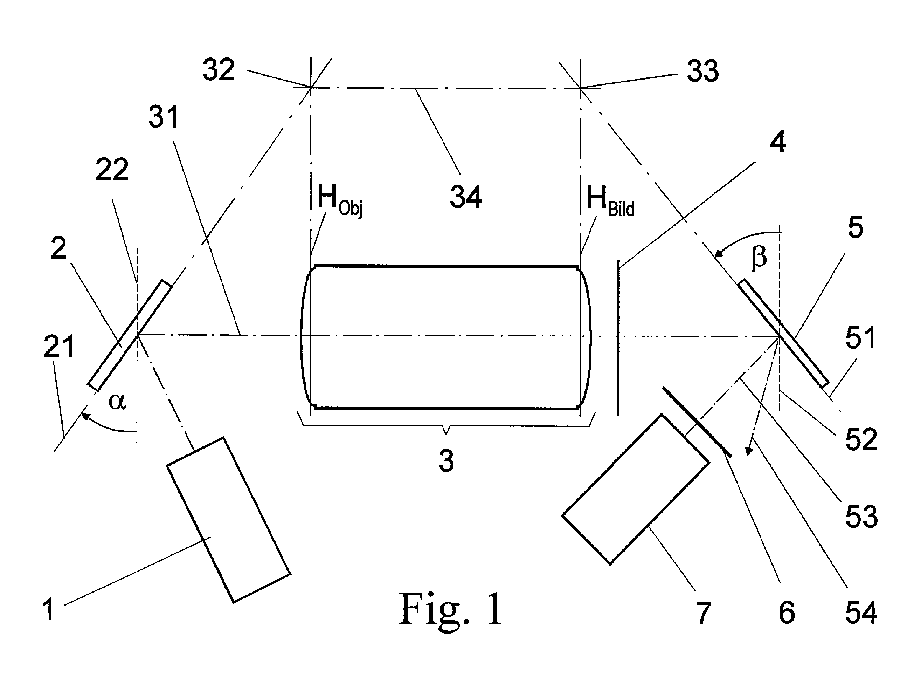

Die erfindungsgemäße Anordnung besteht in ihrem Grundaufbau — wie aus Fig. 1 ersichtlich — aus einer Beleuchtungseinheit 1, einer elektrooptischen Matrix 2, einem abbildenden optischen System 3, einem Anregungsfilter 4, einem Probenträger 5 und einer hochempfindlichen Detektoreinheit 7 für die auf dem Probenträger angeregte Fluoreszenzstrahlung sowie einem der Detektoreinheit 7 vorgelagerten Sperrfilter 6, der für die Fluoreszenzstrahlung transparent und für die Anregungsstrahlung undurchlässig ist.

Die Beleuchtungseinheit 1 liefert im Wesentlichen kollimiertes weißes Licht hoher Intensität und Homogenität. Sie beleuchtet die in Reflexion wirkende elektrooptische Matrix 2 vollflächig, wobei über das austauschbare Anregungsfilter 4 ein ausgewählter Wellenlängenbereich einstellbar ist, bei dem die in den Einzelproben des Probenträgers 5 befindlichen fluoreszierenden Substanzen (sog. Marker) optimal angeregt werden.

Die elektrooptische Matrix 2 wirkt als pixelweise reflektierend (oder alternativ: nicht reflektierend) schaltbares Matrixdisplay und wird — zur örtlich differenzierten Beleuchtung des Probenträgers 5 — über das abbildende optische System 3 scharf auf den Probenträger 5 abgebildet. Da der Probenträger 5 eine Vielzahl von metrisch (matrixförmig) geordneten Einzelproben (im Falle eines Biochip spricht man von Spots, deren Anzahl z.B. in der Größenordnung $10^4$ liegt) enthält, muss das optische System 3 eine hochgenaue Zuordnung von leuchtenden (hellgeschalteten) Pixeln der elektrooptischen Matrix 2 auf die Einzelproben des Probenträgers 5 garantieren. Das geschieht durch ein verzeichnungsarmes, komafreies Objektiv. Am besten geeignet sind dafür telezentrische Abbildungssysteme, von denen allgemein bekannt ist, dass Aberration und Verzeichnung des erzeugten Bildes gering sind.

Um eine Auflicht-Dunkelfeldbeleuchtung zu realisieren, die möglichst schon Beugungs- und Streulichtanteile im Anregungslicht gering hält, wird auch bereits die örtlich differenziert schaltbare elektrooptische Matrix 3 im Auflichtverfahren beleuchtet.

Wegen der erforderlichen hohen Auflösung des optischen Systems 3 ist herkömmlich — aufgrund geringer Abstände von Objektebene und Bildebene zur jeweils ersten Linsenoberfläche des optischen Systems 3 — die Dunkelfeldbeleuchtung (z.B. ringförmig) über das optischen System selbst eingekoppelt, so dass das in der Bildebene ankommende Licht in jedem Fall zu einer direkten Beleuchtung des Probenträgers 5 führen würde. Aus diesem Grund ist gemäß der Erfindung eine Schrägstellung des Probenträgers 5 gegenüber der optischen Achse 31 des optischen Systems 3 erforderlich, die jedoch der exakten Zuordnung von Beleuchtungspixeln der elektrooptischen Matrix 2 zu den Einzelproben des Probenträgers 5 (optisch scharfe Abbildung) kontrovers entgegensteht, da das scharfe Abbild der elektrooptischen Matrix 2 nur in der orthogonalen Bildebene 52 vorhanden ist.

Deshalb werden erfindungsgemäß sowohl der Probenträger 5 als auch die elektrooptische Matrix 2 gegenüber der optischen Achse 31 gegensätzlich geneigt, um eine aus der fotografischen Technik bekannte Scheimpflug-Korrektur der Bildfeldverzerrung zu erreichen. Die für die Erfindung speziell anzuwendende Bedingung, um die erforderliche pixelgenaue Zuordnung von elektrooptischer Matrix 2 und Probenträger 5 zu erreichen, ist aus Fig. 1 ersichtlich. Der Neigungswinkel $\alpha$ der elektrooptischen Matrix 2 gegenüber der orthogonalen Objektebene 22 zur optischen Achse 31 ist so auf den Neigungswinkel $\beta$ des Probenträgers 5 abzustimmen, dass die Schnittlinie 32, in der die geneigte Objektebene 31 die objektseitige Hauptebene $H_{Obj}$ des optischen Systems 3 schneidet, und die Schnittlinie 33, in der die bildseitige Hauptebene $H_{Bild}$ die geneigte Bildebene 51 schneidet, in ein und derselben, zur optischen Achse 31 parallelen Ebene 34 liegen.

Unter dieser Randbedingung können die Neigungswinkel α und β so gewählt werden, dass das durch das abbildende optische System 3 übertragene Licht vom Probenträger 5 nicht in Richtung des Detektionsstrahlengangs 53 reflektiert wird, sondern das Bündel des reflektierten Anregungslichts 54 deutlich an der Detektoreinheit 7 vorbeigeht. Das vor der Detektoreinheit 7 angeordnete Sperrfilter 6 hat somit nur noch eine Sperrfunktion für Streulichtanteile des Anregungslichts, so dass das Anregungslicht fast vollständig von der Detektoreinheit 7 ferngehalten wird.

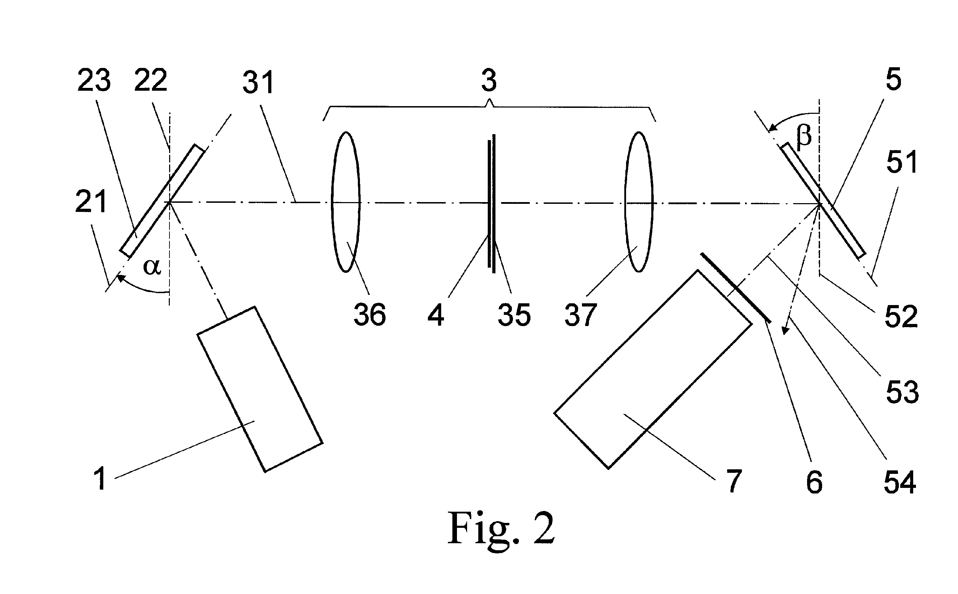

In Fig. 2 ist - in Ausgestaltung des Prinzipschemas nach Fig. 1 — ein geeignetes abbildendes optisches System 3 stilisiert dargestellt, das aus zwei identisch aufgebauten spiegelsymmetrisch angeordneten Teilobjektiven 36 und 37 aufgebaut ist und in dessen Mitte sich die Aperturblendenebene 35 des beidseitig telezentrischen optischen (Gesamt-) Systems 3 befindet. Der abbildende Beleuchtungsstrahlengang zwischen der elektrooptischen Matrix 2, die hier in Form einer Flüssigkristallmatrix (LCD) 23 realisiert ist, und dem Probenträger 5 wird somit mit einem Abbildungsmaßstab von 1:-1 über ein symmetrisch aufgebautes optisches System 3 bei gleich großen, aber entgegengesetzt gerichteten Neigungswinkeln α und β der elektrooptischen Matrix 2 und des Probenträgers 5 (β = -α) realisiert. Der Winkel der Dunkelfeld-Beleuchtung (entspricht dem Neigungswinkel β (=-α), um den der Probenträger 5 bzw. die elektrooptische Matrix 2 gegen die optische Achse 31 des Beleuchtungsstrahlenganges geneigt sind) ist dabei noch frei wählbar und kann somit der numerischen Apertur der Detektoreinheit 7 (Sammeloptik 71) im Fluoreszenz-Detektionsstrahlengang 53 Rechnung tragen.

Das symmetrisch aus baugleichen Teilobjektiven 36 und 37 aufgebaute optische System 3 gewährleistet bei einem (1:-1)-Abbildungsmaßstab eine koma- und verzeichnungsfreie Abbildung der elektrooptischen Matrix 2 auf den Probenträger 5. Ist das optische System 3 beidseitig telezentrisch, so garantiert diese spezielle Art des symmetrischen Beleuchtungsstrahlengangs außerdem, dass Defokussierungen keine Änderung des Abbildungsmaßstabes bewirken. Eine Änderung des Abbildungsmaßstabes wäre ebenso nachteilig wie eine Verzeichnung.

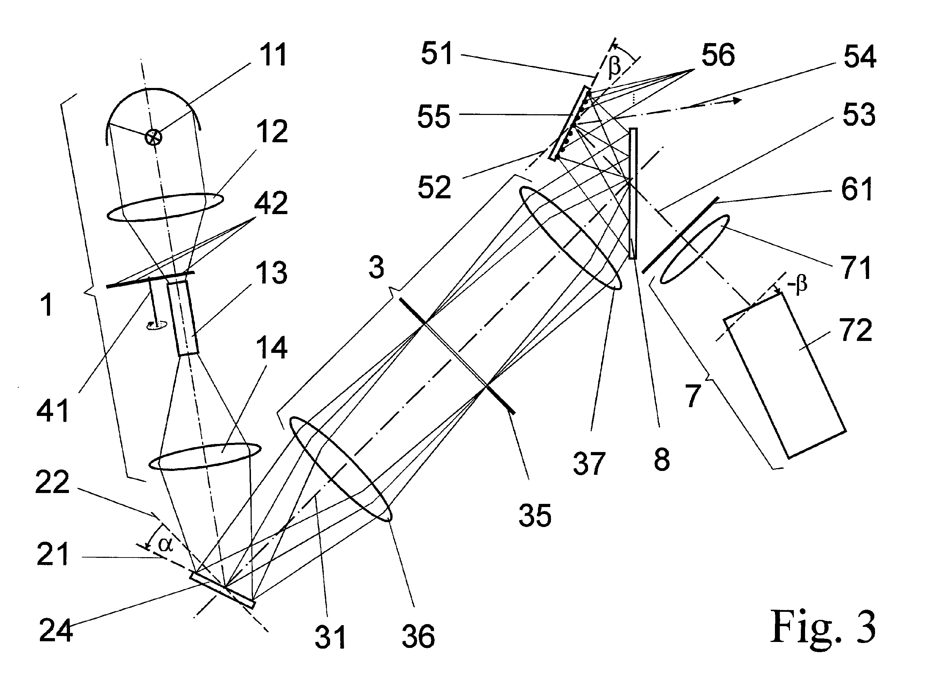

Die in Fig. 3 gezeigte bevorzugte Ausführungsform der Erfindung nutzt die Vorzüge und Gegebenheiten moderner "Multimedia-Projektoren" (z.B. Typ "AstroBeam 530 S"). Diese sind mit schnellen elektrooptischen Matrizen ausgestattet, in deren Beleuchtungsstrahlengang sich eine rotierende Farbfilterscheibe (mit unterschiedlichen Farbsegmenten blau, grün, rot, ggf. auch weiß) befindet, die sich größenordnungsmäßig in 10 ms einmal um ihre Achse dreht und über Synchronimpulse mit der Ansteuerschaltung der elektrooptischen Matrix verbunden ist. In einem so ausgestatteten Projektor weist die Beleuchtungseinheit 1 aufeinanderfolgend eine Reflektorlampe 11, einen Kollektor 12, einen Lichtmischstab 13 zur Homogenisierung des Lichts sowie eine Optik 14 auf. Außerdem kann die in einem solchen Projektor enthaltene leistungsfähige elektrooptische Matrix, die eine Flüssigkristallmatrix (LCD) 23 (wie in Fig. 2 gezeigt) sein kann oder aber eine digitale Mikrospiegelmatrix (DMD — Digital Micro-mirror Device) 24 ist, wie sie in dieser Ausgestaltung gemäß Fig. 3 angegeben, samt der vorhandenen Ansteuerschaltung verwendet werden.

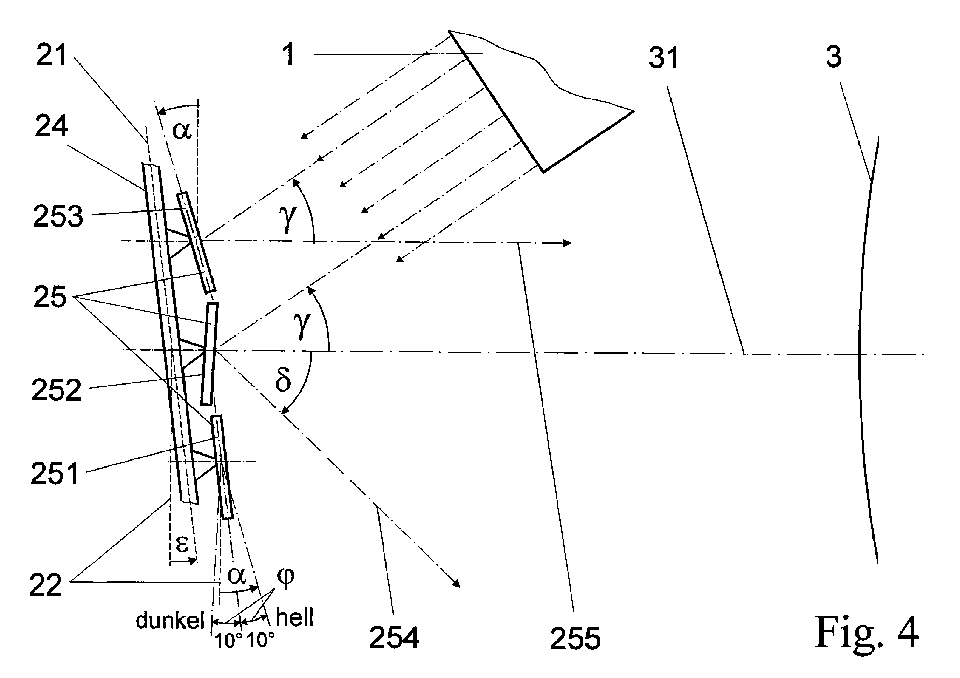

Dabei muss die Mikrospiegelmatrix 24 (im weiteren DMD 24) jedoch gemäß dem oben beschriebenen Grundprinzip geeignet positioniert werden. Vorteilhaft und kostengünstig kann das erreicht werden, indem das Projektiv eines derartigen Projektors gegen ein geeignet dimensioniertes, symmetrisch aufgebautes (1:-1)-Objektiv (vorzugsweise zusammengefügt aus zwei baugleichen leistungsfähigen Objektiven, wie z.B. Visionar ® 1,9/141) ersetzt und das als Ersatz eingebrachte optische System 3 gegenüber dem vorhandenen DMD 24 um den Neigungswinkel α gekippt positioniert wird. Die einzustellenden Winkel der optischen Achse 31 des optischen Systems 3 in Bezug auf den Neigungswinkel ε des DMD 24 und die Neigungswinkel der Elementarspiegel 25 werden nachfolgend anhand der Detailansicht von Fig. 4 und der zugehörigen Beschreibung für die Verwendung eines DMD 24 noch näher erläutert.

Die Anordnung von Fig. 3 nutzt die an sich komplett aus einem Multimedia-Projektor übernommenen Beleuchtungseinheit 1, wobei jedoch die Standard-Farbfilter (grün, blau, rot und ggf. weiß) entweder entfernt werden oder durch verschiedene Anregungsfilter 42, die in dem vorhandenen Filterrad 41 angebracht werden, ersetzt sind. Der erste Fall, wenn das Filterrad 41 ausgeräumt wird, eignet sich für Probenträger 5, die nur auf einen Fluoreszenzmarker zu untersuchen sind, wobei ein geeignetes Anregungsfilter 4 an beliebiger Stelle im abbildenden Beleuchtungsstrahlengang (z.B. gemäß den Fig. 1 oder 2) angeordnet wird. Im zweiten Fall, wenn verschiedene Anregungsfilter 42 im Filterrad 41 integriert sind, können unterschiedliche spezielle Fluoreszenzmarker in den Einzelproben 56 des hier stilisiert dargestellten Biochip 55 untersucht werden. Dies ist besonders für die Analyse von mehrfach "gelabelten" (d.h. mit unterschiedlichen Fluoreszenzmarkern versehenen) Biochips 55 von Vorteil, da das vorhandene Filterrad 41 für den herkömmlichen Zweck eines Multimedia-Projektors bereits so mit dem DMD 24 synchronisiert ist, dass nach einem Schaltimpuls zur Schaltung der Elementarspiegel 25 des DMD 24 in einem Schaltzyklus sämtliche Filter des Filterrades 41 einmal durch geschaltet werden (eine Umdrehung des Filterrades). Damit ist das den Probendurchsatz in herkömmlichen Fluoreszenzanalysegeräten für Multiprobenträger (gemäß DE 199 14 279 C 1) limitierende Produkt aus Schaltzeit der elektrooptischen Matrix 2 und der Anzahl der Wechsel der verschiedenen Anregungsfilter 42 ausschließlich auf die Schaltzeit der elektrooptischen Matrix 2 (hier: des DMD 24) reduziert. Die Anzahl der nötigen Einschreib-(Schalt-)Vorgänge für Beleuchtungsmuster des DMD 24 ist damit unabhängig von der Anzahl der verschiedenen Fluorochrome im Biochip 55. Die Zeitaufwände für das Einschreiben eines Beleuchtungsmusters und für das Messen der mit diesem Beleuchtungsmuster angeregten integralen Fluoreszenz-Intensität sind annähernd gleich groß (z.B. 8 ms).

Bei drei verschiedenen Farbstoffen auf dem Biochip 55 wäre das Verhältnis der notwendigen Verarbeitungszeiten demzufolge:

$$\frac{\text{(altes Verfahren)}}{\text{(neues Verfahren)}} = \frac{\text{(3x Einschreiben + 3x Messen)}}{\text{(1x Einschreiben + 3x Messen)}} \approx \frac{3}{2}$$

Für das Auslesen von Biochip 55 mit Mehrfarben-Labeling ist — angepasst an die entsprechend ersetzten Segmente des Filterrades 41 durch unterschiedliche Anregungsfilter 42 — im Fluoreszenz-Detektionsstrahlengang 53 das üblicherweise Monoband-Sperrfilter 6 durch entsprechende Multiband-Sperrfilter 61 zu ersetzen.

Als weiterer Abänderungen zu den Fig. 1 und 2 ist in Fig. 3 der abbildende Beleuchtungsstrahlengang nach dem Durchlaufen der beiden Teilobjektive 36 und 37 durch einen zusätzlich eingefügten Strahlteiler 8 abgewinkelt. Er vereinfacht die räumliche Ankopplung der Detektoreinheit 7 und ermöglicht eine zusätzliche Trennung von Anregungs- und Fluoreszenzlicht, wenn als Strahlteiler 8 ein dichroitischer Teilerspiegel verwendet wird, der das Anregungslicht reflektiert und für das Fluoreszenzlicht transparent ist. Äquivalent dazu ist es auch möglich, den Biochip 55 auf der optischen Achse 31 in Transmission durch den Strahlteiler 8 hindurch zu beleuchten, wobei der Strahlteiler 8 dann die Umlenkung des Fluoreszenz-Detektionsstrahlengangs 53 bewirkt, wenn der Strahlteiler 8 für das Anregungslicht transparent ist und das Fluoreszenzlicht reflektiert.

Das vom optischen System 3 übertragene Licht mit einer (jeweils nacheinander unterschiedlichen) Anregungswellenlänge wird — im Beispiel gemäß Fig. 3 — vom Strahlteiler 8 reflektiert und scharf auf den Biochip 55 abgebildet. Dabei werden — entsprechend den auf dem DMD 24 hell gesteuerten Matrixelementen — nur ausgewählte Einzelproben (Spots) 56 des Biochip 55 (ggf. alle jeweils einzeln aufeinanderfolgend oder aber gruppenweise zusammengefasst) scharf begrenzt beleuchtet. Das dabei nach dem Reflexionsgesetz reflektierte Anregungslicht 54 wird am Rande des Strahlteilers 8 in eine Lichtfalle gelenkt. Als mögliche Lichtfallen können alle üblichen Methoden (vgl. z.B. Naumann/Schröder: Bauelemente der Optik — Taschenbuch der Technischen Optik, Carl Hanser Verlag München Wien, 1992, S. 76 ff) verwendet werden.

Für den Nachweis der angeregten Fluoreszenzstrahlung in den Einzelproben 56 des Biochip 55 nutzt der Detektionsstrahlengang 53 die für die Fluoreszenzwellenlängen vorhandene Transmissionseigenschaft des dichroitischen Strahlteilers 8, indem die Detektoreinheit 7 dem Biochip 55 gegenüberliegend auf der anderen Seite der optischen Achse 31 angeordnet ist. Bezüglich der Achse des Detektionsstrahlengangs 53, die den Strahlteiler 8 durchläuft, ist der Biochip 55 zwangsläufig geneigt, so dass eine "Scheimpflug-Korrektur" hier ebenfalls sinnvoll wäre. Dazu müsste der optoelektronischen Empfänger, der vorzugsweise eine hochempfindliche Photodiode oder ein Photonendetektor (PMT 72) sein kann, in Bezug auf den Biochip 53 entgegengesetzt im Detektionsstrahlengang 53 geneigt angeordnet werden. Da im Detektionsstrahlengang 53 im Allgemeinen ein Abbildungsmaßstab ungleich 1:-1 erforderlich sein wird, um die Größe des Abbildes des Biochip 55 an die Größe der lichtempfindlichen Fläche des PMT 72 anzupassen, kann hier mittels der Sammeloptik 71 nur eine relativ schlechte und verzeichnungsbehaftete Abbildung des Biochip 55 in die Empfängerebene des PMT 72 realisiert werden. Dies ist jedoch von relativ untergeordneter Bedeutung, da im Fluoreszenz-Detektionsstrahlengang 53 nur integrale Intensitäten (integral über einem fluoreszierenden Spot 56 bzw. integral über einer Gruppe nicht zwingend zusammenhängender Spots 56) erfasst werden und kein örtlich aufgelöstes Signal im Sinne eines Bildes des Biochip 55 (wie es bei den bekannten CCD-Imagern der Fall ist) aufgenommen wird.

Hinsichtlich der Vorzüge einer besonders kontrastreichen örtlich differenzierten Beleuchtung und deren optisch scharfer Abbildung im Dunkelfeldverfahren gemäß Fig. 3 erweist sich ein DMD 24 als besonders vorteilhaft, und soll deshalb in bezug auf die Winkelverhältnisse bei der Neigung der Objektebene 22 nochmals im Detail erläutert werden. Insofern kann Fig. 4 als Detaildarstellung der unteren linken Ecke von Fig. 3 aufgefasst werden, ohne jegliche beschränkende Annahme, dass das DMD 24 nicht auch in die Figuren 1 und 2 einsetzbar wäre.

Das DMD 24 besteht aus einer matrixförmigen Anordnung (Beispiel: Rastermaß 17 µm) einer Vielzahl (z.B. 800 x 600) von kleinsten Elementarspiegeln 25 (Beispiel: 16µm x 16µm), die um ihren Mittelpunkt in zwei mögliche Stellungen ausgelenkt werden können. Von der Vielzahl sind in Fig. 4 drei dieser Elementarspiegel 25 in unterschiedlichen Stellungen schematisch dargestellt. Wie man der Darstellung des Elementarspiegels 251, der in einer stromlosen Ruhestellung gezeigt ist, entnehmen kann, sind die Elementarspiegel (z.B. um ±10°) um ihre Diagonale drehbar. Dabei bedeutet das Drehen (Kippen) des Elementarspiegels 251 im Uhrzeigersinn anwendungsgemäß die Hellschaltung und die entgegengesetzte Drehung die Dunkelschaltung. Die stromlose Nullstellung entspricht der Parallelstellung des Elementarspiegels 252 mit der Basisplatine des DMD 24.

Der Elementarspiegel 252 zeigt die Hellschaltung. Das bedeutet für die erfindungsgemäße Anordnung, dass das DMD 24 als Gesamtelement bei der Hellschaltung der Elementarspiegel 25 wie ein einheitlicher Spiegel einzurichten ist. Der für jeden Elementarspiegel 251, 252, 253 in dessen Hellschaltung erforderliche Neigungswinkel $\alpha$, der für die

Realisierung der Scheimpflug-Bedingung gegenüber dem Biochip 55 einzustellen ist, stimmt dabei nicht mit dem Winkel für die Ausrichtung der Grundplatine des DMD 24 gegenüber der Orthogonalebene 22 überein, sondern ist ein um den Kippwinkel $\varphi$ (hier angenommen: $\varphi = 10°$) reduzierter Neigungswinkel $\varepsilon = \alpha$-$\varphi$.

Für die Hellschaltung der Elementarspiegel 25, hier beispielhaft gezeigt am Elementarspiegel 253, wird der Einfallswinkel $\gamma$ des Anregungslichts von der Beleuchtungseinheit 1 gegenüber der optischen Achse 31 so gewählt, dass das reflektierte Anregungsbündel 254 in das optische System 3 (nur als Frontlinsenoberfläche dargestellt) parallel zur optischen Achse 31 eintritt.

Bei gleichem Einfallswinkel $\gamma$ des von der Beleuchtungseinheit 1 kommenden Anregungslichts auf dem Elementarspiegel 252, der aus seiner (stromlosen) Ruhestellung in positivem Drehsinn um $\varphi = 10°$ (gemäß obigem Beispiel für ein DMD 24) in die Dunkelstellung gekippt wurde, so dass sich eine Winkeldifferenz von $2\varphi = 20°$ gegenüber dem Elementarspiegel 253 ergibt, weist das reflektierte Anregungsbündel 255 einen um 40° größeren Reflexionswinkel $\delta$ gegenüber der optischen Achse 31 als das Anregungsbündel 254 bei Hellschaltung (entspricht $\delta = 0°$) auf. Für den Allgemeinfall heißt das: $\gamma = 2\alpha$, $\delta = 4\varphi$, wobei zwischen Hell- und Dunkelsstellung der Elementarspiegel 25 der doppelte Kippwinkel $|2\varphi|$ liegt. Der somit erheblich vergrößerte Reflexionswinkel $\delta$ gewährleistet, dass das in Dunkelstellung reflektierte Anregungsbündel 255 des beispielhaft dargestellten Elementarspiegels 252 deutlich außerhalb der Eintrittsöffnung des optischen Systems 3 liegt, so dass ein Matrixpixel in Form des Elementarspiegels 252 im Abbildungsstrahlengang des optischen Systems 3 dunkel erscheint und auf dem Biochip 55 eine zugeordnete Einzelprobe (Spot) 56 keine Fluoreszenzanregung von diesem Matrixpixel des DMD 24 erhält.

Liste der verwendeten Bezugszeichen

1 Beleuchtungseinheit
11 Reflektorlampe
12 Kollektor
13 Lichtmischstab
14 Optik

2 elektrooptische Matrix
21 geneigte Objektebene
22 Orthogonalebene (zur optischen Achse)
23 Flüssigkristallmatrix (LCD)
24 digitalmechanische Spiegelmatrix (DMD)
25 Elementarspiegel
251 Elementarspiegel (stromlos)
252 dunkel geschalteter Elementarspiegel
253 hell geschalteter Elementarspiegel
254 reflektiertes Anregungsbündel (bei Dunkelschaltung)
255 reflektiertes Anregungsbündel (bei Hellschaltung)

3 Abbildungsoptik
31 optische Achse
32, 33 Schnittlinien
34 (zur optischen Achse) parallele Ebene
35 Aperturblende
36, 37 (spiegelsymmetrische) Teilobjektive

4 Anregungsfilter
41 Filterrad
42 verschiedene Anregungsfilter (im Filterrad)

5 Probenträger
51 geneigte Bildebene
52 orthogonale Bildebene
53 Detektionsstrahlengang
54 reflektiertes Anregungslicht
55 Biochip

56    Einzelproben (Spots)

6    Sperrfilter
61    Multibandsperrfilter

7    Detektoreinheit
71    Sammeloptik
72    PMT (Photomultiplier)

8    Umlenkspiegel

$\alpha$    Neigungswinkel der Objektebene
$\beta$    Neigungswinkel der Bildebene
$\gamma$    Einfallswinkel des Anregungslichts (gegenüber optischer Achse)
$\delta$    Reflexionswinkel (gegenüber optischer Achse bei Dunkelschaltung)
$\varepsilon$    Neigungswinkel (der DMD-Grundplatine)

$H_{Obj}$    objektseitige Bildebene
$H_{Bild}$    bildseitige Bildebene

**Patentansprüche**

1. Anordnung zum Auslesen der Fluoreszenzstrahlung von Probenträgern mit einer Vielzahl von Einzelproben, bei der zur Anregung einer Fluoreszenzstrahlung in ausgewählten Einzelproben eine schaltbare elektrooptische Matrix zur Erzeugung einer örtlich definiert begrenzten Beleuchtung, ein optisches System zur Abbildung der elektrooptischen Matrix auf den Probenträger, wobei im Strahlengang vor dem Probenträger zur optimalen Anregung der Fluoreszenz wechselbare Anregungsfilter angeordnet sind, sowie ein hochempfindlicher Photoempfänger zur integralen Messung der Fluoreszenzstrahlung der angeregten Einzelproben des Probenträgers vorhanden sind, **dadurch gekennzeichnet, dass**

   - in der Objektebene des optischen Systems (3) die elektrooptische Matrix (2) und in der Bildebene der Probenträger (5) angeordnet sind, wobei die elektrooptische Matrix (2) und der Probenträger (5) gegenüber der optischen Achse (31) des optischen Systems (3) geneigt sind und einer Scheimpflug-Bedingung unterliegen, so dass Objektebene (21) und objektseitige Hauptebene ($H_{Obj}$) sowie Bildebene (51) und bildseitige Hauptebene ($H_{Bild}$) des optischen Systems (3) zwei Schnittlinien (32; 33), die in ein und derselben, zur optischen Achse (31) parallelen Ebene (34) liegen, aufweisen, und
   - die Neigungswinkel ($\alpha$; $\beta$) der elektrooptischen Matrix (2) und des Probenträgers (5) so groß gewählt sind, dass die von der Lichtquelleneinheit (1) kommende, von der elektrooptische Matrix (2) reflektierte und über das optische System (3) auf den Probenträger (5) abgebildete Anregungsstrahlung am Probenträger (5) derart reflektiert wird, dass im Wesentlichen keine Anregungsstrahlung in den Detektionsstrahlengang (53) gelangt.

2. Anordnung nach Anspruch 1, **dadurch gekennzeichnet, dass**
   das abbildende optische System (3) aus zwei identisch aufgebauten Objektiven (36; 37) besteht, die auf derselben optischen Achse (31) und spiegelsymmetrisch bezüglich einer Aperturblendenebene (35) angeordnet sind und die elektrooptische Matrix (2) und der Probenträger (5) spiegelsymmetrisch bezüglich des zweiteiligen optischen Systems (3) angeordnet sind.

3. Anordnung nach Anspruch 2, **dadurch gekennzeichnet, dass**
   das symmetrische optische System (3) einen beidseitig telezentrischen Abbildungsstrahlengang aufweist.

4. Anordnung nach Anspruch 2, **dadurch gekennzeichnet, dass**
   das optische System (3) aus zwei hochauflösenden, lichtstarken Objektiven (36; 37) besteht.

5. Anordnung nach Anspruch 1, **dadurch gekennzeichnet, dass**
   die elektrooptische Matrix (2) eine Reflexions-Flüssigkristallmatrix (23) ist.

6. Anordnung nach Anspruch 1, **dadurch gekennzeichnet, dass**

die elektrooptische Matrix (2) eine digitale Mikrospiegelmatrix (24) ist, die aus einer Vielzahl von Elementarspiegeln (25) besteht, wobei die Elementarspiegel (25) jeweils einheitlich einen definierten Kippwinkel (φ) für die Reflexion von Licht bei Hellschaltung eines Elementarspiegels (252) und einen weiteren definierten Kippwinkel (φ) für die Strahlausblendung bei Dunkelschaltung eines Elementarspiegels (253) aufweisen und in Hellschaltung der Elementarspiegel (25) das von der digitalen Mikrospiegelmatrix (24) reflektierte Anregungsbündel (254) parallel zur optischen Achse (31) in das optische System (3) gerichtet ist.

**7.** Anordnung nach einem der Ansprüche 1 bis 6, **dadurch gekennzeichnet, dass**
im Abbildungsstrahlengang zwischen dem optischen System (3) und dem Probenträger (5) ein Strahlteiler (8) angeordnet ist, wobei der Abbildungsstrahlengang abgewinkelt auf den Probenträger (5) gerichtet, die Anregungsstrahlung infolge der Neigung (β) des Probenträgers (5) aus dem abgewinkelten Abbildungsstrahlengang durch Reflexion am Probenträger (5) ausgekoppelt und die angeregte Fluoreszenzstrahlung durch den Strahlteiler (8) hindurch von der Detektoreinheit (7) aufnehmbar ist.

**8.** Anordnung nach Anspruch 7, **dadurch gekennzeichnet, dass**
der Strahlteiler (8) ein dichroitischer Strahlteiler ist, der Anregungslicht reflektiert und für Fluoreszenzlicht transparent ist.

**9.** Anordnung nach einem der Ansprüche 1 bis 6, **dadurch gekennzeichnet, dass**
im Abbildungsstrahlengang zwischen dem optischen System (3) und dem Probenträger (5) ein Strahlteiler (8) angeordnet ist, wobei der Abbildungsstrahlengang entlang der optischen Achse (31) auf den Probenträger (5) gerichtet, die Anregungsstrahlung infolge der Neigung (β) des Probenträgers (5) aus dem abgewinkelten Abbildungsstrahlengang durch Reflexion am Probenträger (5) ausgekoppelt und die angeregte Fluoreszenzstrahlung durch den Strahlteiler (8) umgelenkt von der Detektoreinheit (7) aufnehmbar ist.

**10.** Anordnung nach Anspruch 9, **dadurch gekennzeichnet, dass**
der Strahlteiler (8) ein dichroitischer Strahlteiler ist, der für das Anregungslicht transparent ist und Fluoreszenzlicht reflektiert.

**11.** Anordnung nach einem der Ansprüche 1 bis 10, **dadurch gekennzeichnet, dass**
zur Realisierung von Beleuchtungseinheit (1) und elektrooptischer Matrix (2) der konstruktive Aufbau eines Multimedia-Projektor vorgesehen ist und anstelle eines projektoreigenen Projektivs das optische System (3) eingesetzt ist, wobei die Neigung der elektrooptischen Matrix (2) gegenüber dem optischen System (3) durch die Neigung des optischen Systems (3) gegenüber der üblichen Lage des eliminierten Projektivs eingestellt ist und der Probenträger (5), der gemäß der Scheimpflug-Bedingung gegenüber der elektrooptischen Matrix (2) eine entsprechende Neigung aufweist, auf der optischen Achse (31) dem optischen System (3) nachgeordnet ist.

**12.** Anordnung nach Anspruch 11, **dadurch gekennzeichnet, dass**
zur Auswertung von mit nur einem Fluoreszenzmarker versehenen Probenträgern (5) ein im Multimedia-Projektor innerhalb der Beleuchtungseinheit (1) herkömmlich vorhandenes Filterrad (41) aus dem Strahlengang der Beleuchtungseinheit (1) entfernt ist.

**13.** Anordnung nach Anspruch 9, **dadurch gekennzeichnet, dass**
zur Auswertung von mehrfach mit Fluoreszenzmarkern markierten Probenträgern (5) ein im Multimedia-Projektor innerhalb der Beleuchtungseinheit (1) herkömmlich vorhandenes Filterrad (41) mit unterschiedlichen Anregungsfiltern (42) bestückt ist, wobei die unterschiedlichen Anregungsfilter (42) aufeinanderfolgend in einem gesteuerten Zyklus in den Strahlengang gedreht werden, und im Detektionsstrahlengang (53) vor der Detektoreinheit (7) ein Multiband-Sperrfilter (61) eingesetzt ist.

**14.** Anordnung nach Anspruch 11, **dadurch gekennzeichnet, dass**
zur Auswertung von mehrfach mit Fluoreszenzmarkern markierten Probenträgern (5) das Filterrad (41) eine Rotationsgeschwindigkeit aufweist, die synchron mit einem Schaltzustand der elektrooptischen Matrix (2) eine volle Umdrehung beschreibt, und die Auslesung der Detektoreinheit (7) zu einzelnen Filterzuständen des Filterrades (41) synchronisiert ist, so dass in der Detektoreinheit (7) eine Serie von Messwerten, die für gleiche Einzelproben (56) mit unterschiedlichen Anregungsfiltern (42) erzeugt werden, aufnehmbar ist.

Fig. 1

EP 1 265 064 A1

Fig. 2

EP 1 265 064 A1

Fig. 3

Fig. 4

EP 1 265 064 A1

Europäisches
Patentamt

**EUROPÄISCHER RECHERCHENBERICHT**

Nummer der Anmeldung

EP 02 01 1512

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| P,A | WO 02 14838 A (ABLE SIGNAL COMPANY LLC ;SANDSTROM PERRY (US)) 21. Februar 2002 (2002-02-21) * page 43, line 17 - page 47, line 12; page 50, lines 15-26; figure 1 * | 1,5-10, 12,13 | G01N21/64 |
| D,A | DE 199 14 279 C (JENA OPTRONIK GMBH) 7. September 2000 (2000-09-07) * column 4, lines 6-31; column 5, lines 2-10 and lines 53-55; column 11, lines 19-29; figure 6 * | 1,5,12, 13 | |

RECHERCHIERTE SACHGEBIETE (Int.Cl.7)

G01N

Der vorliegende Recherchenbericht wurde für alle Patentansprüche erstellt

| Recherchenort | Abschlußdatum der Recherche | Prüfer |
|---|---|---|
| MÜNCHEN | 9. August 2002 | Hoogen, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

14

**ANHANG ZUM EUROPÄISCHEN RECHERCHENBERICHT**
**ÜBER DIE EUROPÄISCHE PATENTANMELDUNG NR.**   EP 02 01 1512

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-08-2002

| Im Recherchenbericht angeführtes Patentdokument | Datum der Veröffentlichung | Mitglied(er) der Patentfamilie | Datum der Veröffentlichung |
|---|---|---|---|
| WO 0214838 A | 21-02-2002 | AU 8718001 A<br>WO 0214838 A2 | 25-02-2002<br>21-02-2002 |
| DE 19914279 C | 07-09-2000 | DE 19914279 C1 | 07-09-2000 |

Für nähere Einzelheiten zu diesem Anhang : siehe Amtsblatt des Europäischen Patentamts, Nr.12/82